(19) Europäisches Patentamt / European Patent Office / Office européen des brevets

(11) **EP 3 145 766 B1**

(12) **EUROPEAN PATENT SPECIFICATION**

(45) Date of publication and mention
of the grant of the patent:
**06.04.2022 Bulletin 2022/14**

(21) Application number: **15803719.2**

(22) Date of filing: **20.05.2015**

(51) International Patent Classification (IPC):
**B60T 8/1755** *(2006.01)*     **B60K 31/12** *(2006.01)*
**B60W 30/02** *(2012.01)*     **B60W 30/14** *(2006.01)*
**B62D 6/00** *(2006.01)*     **B60W 50/14** *(2020.01)*
**B60W 10/18** *(2012.01)*     **B60W 30/04** *(2006.01)*
**B60W 30/18** *(2012.01)*     **B60W 30/045** *(2012.01)*

(52) Cooperative Patent Classification (CPC):
**B60W 30/045; B60W 10/18; B60W 30/04;
B60W 30/18072;** B60T 2201/16; B60W 2030/1809;
B60W 2050/143; B60W 2520/125; B60W 2720/10;
B60W 2720/106; B60W 2720/125

(86) International application number:
**PCT/SE2015/050575**

(87) International publication number:
**WO 2015/187076 (10.12.2015 Gazette 2015/49)**

(54) **METHOD AND SYSTEM FOR THE ADAPTATION OF THE DRIVING OF A VEHICLE ON A ROADWAY IN ASSOCIATION WITH TAKING A CURVE**

VERFAHREN UND SYSTEM ZUR ANPASSUNG DES FAHRENS EINES FAHRZEUGS AUF EINER STRASSE IM ZUSAMMENHANG MIT EINER KURVENFAHRT

PROCÉDÉ ET SYSTÈME D'ADAPTATION DE LA CONDUITE D'UN VÉHICULE SUR UNE CHAUSSÉE EN ASSOCIATION AVEC LA PRISE D'UN VIRAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2014 SE 1450601**

(43) Date of publication of application:
**29.03.2017 Bulletin 2017/13**

(73) Proprietor: **Scania CV AB**
**151 87 Södertälje (SE)**

(72) Inventors:
• **ANDERSSON, Jonny**
**S-151 68 Södertälje (SE)**

• **BREDBERG, Linus**
**S-Tullinge 146 34 (SE)**

(74) Representative: **Scania CV AB**
**Patents, GP 117kv**
**151 87 Södertälje (SE)**

(56) References cited:
WO-A1-2011/133091     DE-A1-102012 215 100
DE-A1-102013 225 431     US-A1- 2002 075 143
US-A1- 2008 288 148     US-A1- 2008 288 148
US-A1- 2014 114 546     US-A1- 2014 114 546
US-A1- 2014 121 928

**Description**

TECHNICAL AREA

The invention relates to a method for the adaptation of the driving of a vehicle on a roadway in association with taking a curve according to the preamble of claim 1. The invention relates to a system for the adaptation of the driving of a vehicle on a roadway in association with taking a curve. The invention relates also to a motor vehicle. The invention relates also to a computer program and a computer program product.

BACKGROUND

The automatic adaptation of the speed of a vehicle according to the current degree of curvature during the driving of vehicles that includes the taking of a curve is known. Many drivers, however, prefer to drive manually on roads with curves in order to retain feeling and control over the vehicle.

EP2527222 reveals driver assistance for the control of the speed taking into consideration curve data, which have been drawn up using navigational data or sensors of the surroundings, where the speed is adapted before taking a curve. The speed of taking the curve is calculated based on a maximum curvature and/or turn at a defined position in the curve and a pre-determined comfortable lateral acceleration.

A similar system is described in DE 10 2012 215100A1, on which the two-part form of the independent claims is based.

Similar systems require the driving of vehicles on roads for which map data are available, and that the vehicle be equipped with a map information unit comprising a digital map and positional equipment in order to be able to determine the position of the vehicle along its route.

PURPOSE OF THE INVENTION

One purpose of the present invention is to achieve a method and a system for the adaptation of the driving of a vehicle on a roadway in association with taking a curve that makes improved safety possible.

SUMMARY OF THE INVENTION

According to the present invention, the aforementioned problem is solved by a method according to claim 1, a system according to claim 6, a motor vehicle according to claim 11, a computer program according to claim 12 and a computer program product according to claim 13. Preferred embodiments of the present invention are laid down in the dependent claims.

It is in this case avoided that the driver is permitted to accelerate too strongly or to resume a previously preset cruise-control speed in a curve. As a consequence of this, safety while taking a curve is in this case improved, whereby the risks of skidding or leaving the roadway in the curve are reduced. With such a solution, high safety when taking a curve can be achieved without map data or corresponding means to determine coming degrees of curvature along the route of the vehicle being required for adaptation of the speed when taking the curve. It is in this case made possible for drivers who drive a vehicle without cruise-control systems to obtain assistance when taking a curve.

According to one embodiment, the method comprises the step to initiate automatically retardation of the vehicle, in the case in which the current lateral acceleration has been determined to exceed the maximum permitted lateral acceleration. Safety while taking a curve is in this case improved, whereby the risks of skidding or leaving the roadway in the curve are reduced. With such a solution, high safety when taking a curve can be achieved without map data or corresponding means to determine coming degrees of curvature along the route of the vehicle being required for adaptation of the speed when taking the curve. It is in this case made possible for drivers who drive a vehicle without cruise-control systems to obtain assistance when taking a curve.

According to one embodiment of the method, retardation of the vehicle takes place through what is known as "coasting in gear" of the vehicle engine and/or coasting in neutral. High safety when taking a curve is in this case made possible.

According to one embodiment, the method comprises the step of presenting to the driver of the vehicle the fact that automatic limitation of the longitudinal acceleration of the vehicle is being applied. The safety is in this way improved in that the driver is informed that the limitation is being applied. Furthermore, improved driver behaviour is made possible in that the driver is informed that the limitation is being applied.

According to one embodiment, the method comprises the step of presenting to the driver of the vehicle the fact that automatically initiated retardation of the vehicle is being applied. The safety is in this way improved in that the driver is informed that the retardation is being applied. Furthermore, improved driver behaviour is made possible in that the driver is informed that the retardation is being applied.

The embodiments of the system demonstrate corresponding advantages as corresponding embodiments of the method described above.

DESCRIPTION OF DRAWINGS

The present invention will be better understood with reference to the following detailed description read together with the attached drawings, where the same reference numbers refer to the same parts throughout the several views, and where:

Figure 1 illustrates schematically a motor vehicle according to one embodiment of the present invention;

Figure 2 illustrates schematically a system for the adaptation of the driving of a vehicle on a roadway in association with taking a curve according to one embodiment of the present invention;

Figure 3 illustrates schematically a limiting function for the limitation of the longitudinal acceleration of the vehicle depending on the current lateral acceleration according to one embodiment of the present invention;

Figure 4 illustrates schematically a block diagram of a method for the adaptation of the driving of a vehicle on a roadway in association with taking a curve according to one embodiment of the present invention; and

Figure 5 illustrates schematically a computer according to one embodiment of the present invention.

DESCRIPTION OF EMBODIMENTS

In this document, the term "link" refers to a communication link that may be a physical line, such as an opto-electronic communication line, or a non-physical line, such as a wireless connection, for example a radio link or microwave link.

In this document, the term "coasting in gear" refers to driving of the vehicle during which the wheels of the vehicle rotate the vehicle engine without any fuel injection to the engine taking place.

In this document, the term "coasting in neutral" refers to driving of the vehicle during which the propulsion of the vehicle is disconnected in such a manner that the wheels of the vehicle do not rotate the engine of the vehicle, by, for example, placing the gear level into the neutral position and/or depressing the clutch.

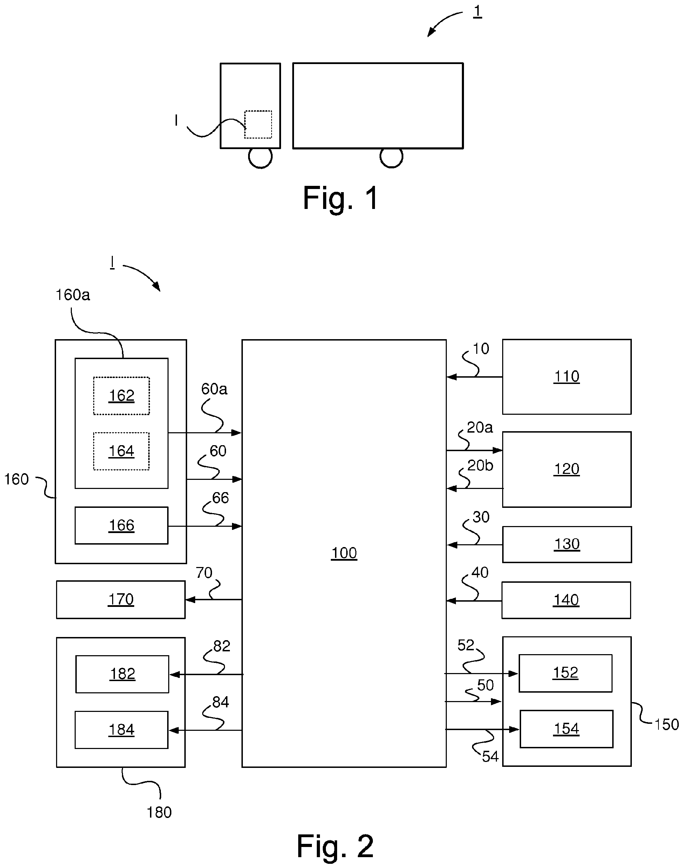

Figure 1 illustrates schematically a motor vehicle 1 according to one embodiment of the present invention. The vehicle 1 given as an example is constituted by a heavy vehicle in the form of a lorry. Alternatively, the vehicle may be constituted by any appropriate vehicle at all, such as a bus or a car.

The vehicle includes a system I according to the present invention.

Figure 2 illustrates schematically a block diagram of a system I for the adaptation of the driving of a vehicle on a roadway in association with taking a curve according to one embodiment of the present invention.

The system I comprises an electronic control unit 100.

The system I comprises means 110 to determine continuously the current lateral acceleration of the vehicle. The means 110 to determine continuously the current lateral acceleration of the vehicle includes sensor means in the form of yaw angle gauges and speed measurement means in order to determine the speed of the vehicle, whereby the lateral acceleration can in this way be determined. The means 110 to determine continuously the current lateral acceleration of the vehicle includes calculation means for calculation based on the geometry of the vehicle itself, and means in the form of sensor means to determine differences in the speeds of individual wheels.

The system I comprises means 120 to compare, based on a maximum permitted lateral acceleration of the vehicle that has been determined, the current lateral acceleration with the maximum permitted lateral acceleration.

The system I comprises means 130 to determine continuously the speed of the vehicle. The means 130 to determine continuously the speed of the vehicle includes, according to one variant, speed measurement means.

The system I comprises means 140 to determine a maximum permitted lateral acceleration. The means 140 to determine a maximum permitted lateral acceleration comprises the determination of a predetermined maximum permitted lateral acceleration, which is based on normal conditions with respect to properties of the vehicle such as the length of the vehicle, the width of the vehicle, the composition of the vehicle train, the distribution of load on the vehicle, the centre of gravity of the vehicle, and the axle pressure of the vehicle, and/or properties of the surroundings such as the effective width of the traffic lane, frictional properties of the roadway, visibility conditions and camber properties of the roadway. The predetermined maximum permitted lateral acceleration is, according to one embodiment, of the magnitude of 2 m/s$^2$. The maximum permitted lateral acceleration is in this case constituted by a predetermined maximum permitted lateral acceleration. According to one alternative or supplementary variant, the electronic control unit 100 includes stored data of the maximum permitted lateral acceleration.

The system I comprises means 150 to apply, in the case in which the current lateral acceleration lies below the maximum permitted lateral acceleration, an automatic limitation of the longitudinal acceleration of the vehicle and/or the speed of the vehicle in order to avoid that the current lateral acceleration exceeds the maximum permitted lateral acceleration.

The means 150 to apply, in the case in which the current lateral acceleration lies below the maximum permitted lateral acceleration, an automatic limitation of the longitudinal acceleration of the vehicle and/or the speed of the vehicle in order to avoid that the current lateral acceleration exceeds the maximum permitted lateral acceleration comprises means 152 to, in the case in which the current lateral acceleration lies below the maximum permitted lateral acceleration, apply an automatic limitation of the longitudinal acceleration of the vehicle in order to avoid that the current lateral acceleration exceeds the maximum permitted lateral acceleration.

The means 150 to apply, in the case in which the current lateral acceleration lies below the maximum permitted lateral acceleration, an automatic limitation of the longitudinal acceleration of the vehicle and/or the speed of the vehicle in order to avoid that the current lateral acceleration exceeds the maximum permitted lateral acceleration comprises means 154 to, in the case in which the current lateral acceleration lies below the maximum permitted lateral acceleration, apply an automatic limitation of the speed of the vehicle in order to avoid that the current lateral acceleration exceeds the maximum permitted lateral acceleration.

The system I comprises means 100 to determine limitation $a_{lim,long}$ of the longitudinal acceleration of the vehicle based on the current lateral acceleration. The means 100 to determine limitation of the longitudinal acceleration of the vehicle based on current lateral acceleration comprises, according to one variant, the electronic control unit 100. The limitation $a_{lim,long}$ is determined, according to one variant, according to:

$$a_{lim,long} = F(|a_{lat}|)$$

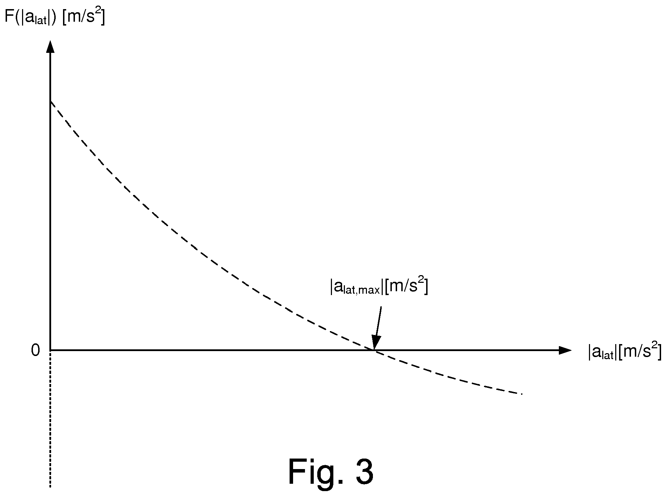

Figure 3 illustrates schematically such a limiting function $F(|a_{lat}|)$.

The system I comprises, according to one variant, means 160 to determine the presence of curvature along the route of the vehicle. The means to determine the presence of curvature is, according to one variant, arranged for continuous determination.

The means 160 to determine continuously the presence of curvature along the route of the vehicle includes, according to one variant, a map information unit 162 comprising map data including properties of the roadway along the route of the vehicle, including curvature.

The means 160 to determine continuously the presence of curvature along the route of the vehicle includes, according to one variant, means 164 to determine the position of the vehicle. The means 164 to determine the position of the vehicle comprises a geographical position-determination system to determine continuously the position of the vehicle along its route. An example of a geographical position-determination system is GPS.

The map information unit 162 and the means 164 to determine the position of the vehicle are comprised, according to one variant, of means 160a to determine the route of the vehicle, where the means to determine the route of the vehicle is arranged to provide predetermined properties of the roadway along the route of the vehicle including. The said map data of the map information unit 162 include also properties of the roadway along the route of the vehicle, including topography.

Through the map information unit 162 and the means 164 to determine the position of the vehicle, it is consequently made possible to identify continuously the position of the vehicle and properties of the roadway, including the degree of curvature along the route of the vehicle.

Through the map-information unit 162, it is made possible to determine in advance the degree of curvature along the route of the vehicle.

The means 160 to determine continuously the presence of curvature along the route of the vehicle includes, according to one variant, camera means 166. The camera means 166 is arranged to detect properties of the roadway, including the degree of curvature, along the route of the vehicle. The camera means 166 is arranged to detect the form of the extent of the roadway, including the curvature of the roadway and/or road markings, in order in this way to determine the curvature of the roadway along which the vehicle is travelling. The camera means may include one or several cameras for the detection.

By determining by means of the means 160 the degree of curvature of the roadway, such prediction of the degree of curvature can be used to determine limitation $a_{lim,long}$ of the longitudinal acceleration of the vehicle. The system I comprises in this case means 100 to determine limitation of the longitudinal acceleration of the vehicle based on the current lateral acceleration and the curvature that has been determined. The means 100 to determine limitation of the longitudinal acceleration of the vehicle based on current lateral acceleration and the curvature that has been determined comprises, according to one variant, the electronic control unit 100. The limitation $a_{lim,long}$ is determined, according to one variant, according to:

$$a_{lim,long} = \min\big(F(|a_{lat}|), a(s_{curr})\big)$$

where $a(s_{curr})$ is the longitudinal acceleration that is required to maintain the correct acceleration.

It may be desirable, according to one variant, not to permit an obligatory reduction in speed, whereby the limitation $a_{lim,long}$ is determined according to:

$$a_{lim,long} = \max\big(0, \min\big(F(|a_{lat}|), a(s_{curr})\big)\big)$$

The system I comprises means 100 to determine limitation $v_{max}$ of the speed of the vehicle based on the current lateral acceleration $a_{lat,max}$. The means 100 to determine limitation of the speed of the vehicle based on maximum permitted lateral acceleration comprises, according to one variant, the electronic control unit 100. The determination of the maximum speed based on the maximum permitted lateral acceleration for curvature uses information about the curvature of the roadway along the route of the vehicle, whereby the following equation A) is used:

$$(A) \quad v_{max}(s) = \sqrt{|a_{lat,max}(s)/c(s)|}$$

where $v_{max}(s)$ is the maximum speed along the stretch s in front of the vehicle, $a_{alat,max}(s)$ is the maximum permitted lateral acceleration along the stretch s in front of the vehicle, and $c(s)$ is the degree of curvature along the stretch s in front of the vehicle.

The system I comprises means 170 to initiate automatically retardation of the vehicle, in the case in which the current lateral acceleration has been determined to exceed the maximum permitted lateral acceleration.

Retardation of the vehicle is arranged to take place, according to one variant, through what is known as "coasting in gear" of the vehicle engine and/or coasting in neutral.

The means 170 to initiate automatically retardation of the vehicle comprises in this case means to activate coasting in gear of the vehicle engine and/or coasting in neutral.

The system I comprises means 182 to present to the driver of the vehicle the fact that automatic limitation of the longitudinal acceleration of the vehicle and/or the speed of the vehicle is being applied.

The means 182 to present to the driver of the vehicle the fact that automatic limitation of the longitudinal acceleration of the vehicle and/or the speed of the vehicle is being applied can be constituted by any suitable presentation means at all, such as visual presentation means, audible presentation means and/or tactile presentation means.

The visual presentation means includes, according to one variant, a display unit and/or a blinking unit or equivalent. The audible presentation means includes presentation in the form of a voice message and/or presentation in the form of a sound alarm. The tactile presentation means includes an influence on the steering wheel of the vehicle in the form of vibration/motion and/or influence on the seat of the vehicle in the form of vibration and/or influence on a pedal such as the accelerator pedal or brake pedal.

The system I comprises means 184 to present to the driver of the vehicle the fact that automatically initiated retardation of the vehicle is being applied. The means 184 to present to the driver of the vehicle the fact that automatically initiated retardation of the vehicle is being applied can be constituted by any suitable presentation means at all, such as visual presentation means, audible presentation means and/or tactile presentation means.

The visual presentation means includes, according to one variant, a display unit and/or a blinking unit or equivalent. The audible presentation means includes presentation in the form of a voice message and/or presentation in the form of a sound alarm. The tactile presentation means includes an influence on the steering wheel of the vehicle in the form of vibration/motion and/or influence on the seat of the vehicle in the form of vibration and/or influence on a pedal such as the accelerator pedal or brake pedal.

The means 182 and the means 184 are comprised in a means 180 for driver presentation.

The system I comprises in this case means 180 for driver presentation comprising the means 182 and the means 184. The means 182 and the means 184 are constituted, according to one variant, of one and the same means.

The electronic control unit 100 is connected such that it exchanges signals over a link 10 with the means 110 to determine continuously the current lateral acceleration of the vehicle. The electronic control unit 100 is arranged to receive over the link 10 a signal from the means 110 representing lateral acceleration data for the current lateral acceleration of the vehicle.

The electronic control unit 100 is connected such that it exchanges signals over a link 20a with the means 120 to compare, based on a maximum permitted lateral acceleration that has been determined, the current lateral acceleration with the maximum permitted lateral acceleration. The electronic control unit 100 is arranged to transmit a signal through the link 20a to the means 120 representing lateral acceleration data for the current lateral acceleration and lateral acceleration data for the maximum permitted lateral acceleration.

The electronic control unit 100 is connected such that it exchanges signals over a link 20b with the means 120 to compare, based on the maximum permitted lateral acceleration that has been determined, the current lateral acceleration with the maximum permitted lateral acceleration. The electronic control unit 100 is arranged to receive over the link 20b a signal from the means 120 representing comparison data for comparison of the current lateral acceleration of the vehicle and the maximum permitted lateral acceleration.

The electronic control unit 100 is connected such that it exchanges signals over a link 30 with the means 130 to determine continuously the speed of the vehicle. The electronic control unit 100 is arranged to receive over the link 30 a signal from the means 130 that represents speed data for the speed of the vehicle.

The electronic control unit 100 is connected such that it exchanges signals over a link 40 with the means 140 to determine a maximum permitted lateral acceleration. The electronic control unit 100 is arranged to receive over the link 40 a signal from the means 140 representing lateral acceleration data for the maximum permitted lateral acceleration.

The electronic control unit 100 is connected such that it exchanges signals over a link 50 with the means 150 to apply, in the case in which the current lateral acceleration lies below the maximum permitted lateral acceleration, an automatic limitation of the longitudinal acceleration of the vehicle and/or the speed of the vehicle in order to avoid that the current lateral acceleration exceeds the maximum permitted lateral acceleration. The electronic control unit 100 is arranged to transmit a signal over a link 50 to the means 150 representing limitation data in order to apply an automatic limitation of the longitudinal acceleration of the vehicle and/or the speed of the vehicle in order to avoid that the current lateral acceleration exceeds the maximum permitted lateral acceleration.

The electronic control unit 100 is connected such that it exchanges signals over a link 52 with the means 152 to apply, in the case in which the current lateral acceleration lies below the maximum permitted lateral acceleration, an automatic limitation of the longitudinal acceleration of the vehicle in order to avoid that the current lateral acceleration exceeds the maximum permitted lateral acceleration. The electronic control unit 100 is arranged to transmit a signal over a link 52 to the means 150 representing limitation data in order to apply an automatic limitation of the longitudinal acceleration of the vehicle in order to avoid that the current lateral acceleration exceeds the maximum permitted lateral acceleration.

The electronic control unit 100 is connected such that it exchanges signals over a link 54 with the means 154 to apply, in the case in which the current lateral acceleration lies below the maximum permitted lateral acceleration, an automatic limitation of the speed of the vehicle in order to avoid that the current lateral acceleration exceeds the maximum permitted lateral acceleration. The electronic control unit 100 is arranged to transmit a signal over a link 54 to the means 154 representing limitation data in order to apply an automatic limitation of speed of the vehicle in order to avoid that the current lateral acceleration exceeds the maximum permitted lateral acceleration.

The electronic control unit 100 is connected through a link 60 such that it exchanges signals with the means 160 to determine the presence of curvature along the route of the vehicle. The electronic control unit 100 is arranged to receive over the link 60 a signal from the means 160 that represents data for the curvature.

The electronic control unit 100 is connected through a link 60a such that it exchanges signals with the means 160a comprising the map information unit 162 and the means 164 to determine the position of the vehicle. The electronic control unit 100 is arranged to receive over the link 60a a signal from the means 160a that represents map data for the degree of curvature along the route of the vehicle.

The electronic control unit 100 is connected through a link 66 such that it exchanges signals with the camera means 166. The electronic control unit 100 is arranged to receive over the link 66 a signal from the camera means 166 that represents data for the degree of curvature data of the roadway along the route of the vehicle.

The electronic control unit 100 is connected such that it exchanges signals over a link 70 with the means 170 to automatically initiate retardation of the vehicle, in the case in which the current lateral acceleration has been determined to exceed the maximum permitted lateral acceleration. The electronic control unit 100 is arranged to transmit through the link 70 a signal to the means 170 representing initiation data for initiation of retardation of the vehicle, according to one variant including data for activation of coasting in gear and/or coasting in neutral of the vehicle.

The electronic control unit 100 is connected such that it exchanges signals through a link 82 with the means 182 to present to the driver of the vehicle the fact that automatic limitation of the longitudinal acceleration of the vehicle and/or the speed of the vehicle is being applied. The electronic control unit 100 is arranged to transmit over the link 82 a signal to the means 182 that represents presentation data.

The electronic control unit 100 is connected such that it exchanges signals through a link 84 with the means 184 to present to the driver of the vehicle the fact that automatically initiated retardation of the vehicle is being applied. The electronic control unit 100 is arranged to transmit over the link 84 a signal to the means 184 that represents presentation data.

The electronic control unit 100 is arranged to process the said lateral acceleration data for the current lateral acceleration of the vehicle and the said lateral acceleration for the maximum permitted lateral acceleration and to transmit them to the means 120 that compares these data in order to determine comparison data for the comparison of the current lateral acceleration and the maximum permitted lateral acceleration.

The electronic control unit 100 is arranged to process the said speed data for the speed of the vehicle in order to determine whether the current lateral acceleration lies below the maximum permitted lateral acceleration and, if this is the case, to transmit to the means 150 limitation data in order to apply an automatic limitation of the longitudinal acceleration of the vehicle and/or the speed of the vehicle in order to avoid that the current lateral acceleration exceeds the maximum permitted lateral acceleration, and, more specifically, limitation data in order to apply an automatic limitation of the longitudinal acceleration of the vehicle to the means 152 and/or limitation data in order to apply an automatic limitation of the speed of the vehicle to the means 154.

The electronic control unit 100 is arranged to transmit, in the case in which it has been determined that the current lateral acceleration lies below the maximum permitted lateral acceleration, presentation data to the means 182 for presentation to the driver that automatic limitation of the longitudinal acceleration of the vehicle and/or the speed of the vehicle is being applied.

The electronic control unit 100 is arranged to process the said comparison data speed data for the speed of the vehicle in order to determine whether the current lateral acceleration exceeds the maximum permitted lateral acceleration and, if this is the case, to transmit to the means 170 initiation data for initiation of retardation of the vehicle, according to one variant including data for the activation of coasting in gear and/or coasting in neutral of the vehicle.

The electronic control unit 100 is arranged to transmit, in the case in which it has been determined that the current lateral acceleration exceeds the maximum permitted lateral acceleration, presentation data to the means 184 for presentation to the driver that automatically initiated retardation of the vehicle is being applied.

Figure 3 illustrates schematically such a limiting function $F(la_{lat}l)$ for limitation of the longitudinal acceleration of the vehicle depending on the current lateral acceleration $a_{lat}$ according to one embodiment of the present invention.

During driving of vehicle, the vehicle will be in this case, as long as the lateral acceleration is low or non-existent, will be permitted to accelerate without any significant limitation, in accordance with the graph shown in Figure 3.

If the current lateral acceleration lies below the maximum permitted lateral acceleration, an automatic limitation of the longitudinal acceleration of the vehicle according to the function $F(la_{lat}l)$ in Figure 3 will be applied.

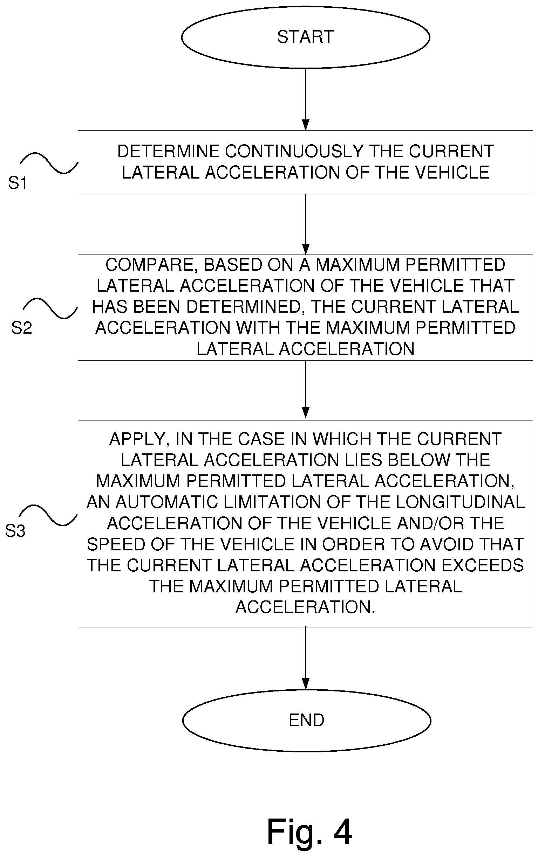

If the current lateral acceleration exceeds the maximum permitted lateral acceleration $a_{lat,max}$, an automatic retardation of vehicle is applied, i.e. the acceleration will in this case be negative, which leads to a limitation in speed. Figure 4 illustrates schematically a block diagram of a method for the adaptation of the driving of a vehicle on a roadway in association with taking a curve according to one embodiment of the present invention.

According to one embodiment, the method for the adaptation of the driving of a vehicle on a roadway in association with taking a curve comprises a first step S1. The current lateral acceleration of the vehicle is determined continuously in this step.

According to one embodiment, the method for the adaptation of the driving of a vehicle on a roadway in association with taking a curve comprises a second step S2. The current lateral acceleration is in this step compared with the maximum permitted lateral acceleration, based on a maximum permitted lateral acceleration of the vehicle that has been determined.

According to one embodiment, the method for the adaptation of the driving of a vehicle on a roadway in association with taking a curve comprises a third step S3. An automatic limitation of the longitudinal acceleration of the vehicle and/or the speed of the vehicle is in this step applied, in the case in which the current lateral acceleration lies below the maximum permitted lateral acceleration, in order to avoid that the current lateral acceleration exceeds the maximum permitted lateral acceleration.

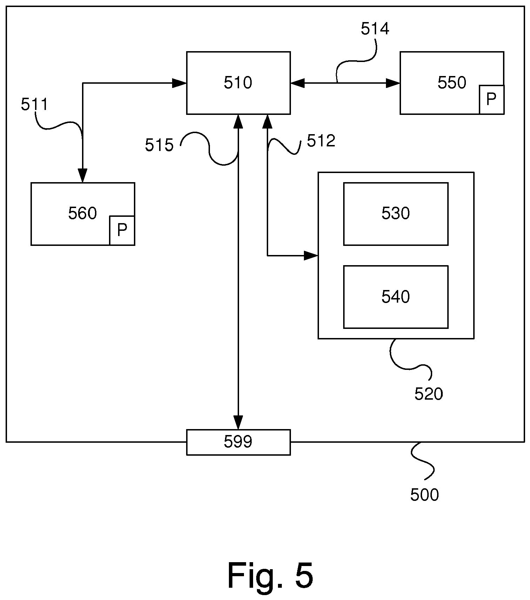

With reference to Figure 5, there is shown a drawing of a design of an arrangement 500. The control unit 100 that has been described with reference to Figure 2 can comprise in one execution the arrangement 500. The arrangement 500 comprises a non-transient memory 520, a data processing unit 510 and a read/write memory 550. The non-transient memory 520 has a first section of memory 530 in which a computer program, such as an operating system, is stored in order to control the function of the arrangement 500. Furthermore, the arrangement 500 comprises a bus controller, a serial communication port, I/O means, an A/D converter, a unit for the input and transfer of time and date, an event counter and an interrupt controller (not shown in the drawing). The non-transient memory 520 has also a second section of memory 540.

There is provided a computer program P that comprises routines for the adaptation of the driving of a vehicle on a roadway in association with taking a curve according to the innovative method. The program P comprises routines to determine continuously the current lateral acceleration of the vehicle. The program P comprises routines to compare, based on a maximum permitted lateral acceleration of the vehicle that has been determined, the current lateral acceleration with the maximum permitted lateral acceleration. The program P comprises routines to apply, in the case in which the current lateral acceleration lies below the maximum permitted lateral acceleration, an automatic limitation of the longitudinal acceleration of the vehicle and/or the speed of the vehicle in order to avoid that the current lateral acceleration exceeds the maximum permitted lateral acceleration. The program P may be stored in an executable form or in a compressed form in a memory 560 and/or a read/write memory 550.

When it is described that the data processing unit 510 carries out a certain function, it is to be understood that the data processing unit 510 carries out a certain part of the program that is stored in the memory 560, or a certain part of the program that is stored in the read/write memory 550.

The data processing arrangement 510 can communicate with a data port 599 through a data bus 515. The non-transient memory 520 is intended for communication with the data processing unit 510 through a data bus 512. The separate memory 560 is intended to communicate with the data processing unit 510 through a data bus 511. The read/write memory 550 is arranged to communicate with the data processing unit 510 through a data bus 514. Links associated with the control unit 100, for example, may be connected to the data port 599.

When data is received at the data port 599 it is temporarily stored in the second section of memory 540. When the data that has been received has been temporarily stored, the data processing unit 510 is prepared for the execution of code in a manner that has been described above. The signals received on the data port 599 can be used by the arrangement 500 to determine continuously the current lateral acceleration of the vehicle. The signals received on the data port 599 can be used by the arrangement 500 to compare, based on a maximum permitted lateral acceleration of the vehicle that has been determined, the current lateral acceleration with the maximum permitted lateral acceleration. The signals received on the data port 599 can be used by the arrangement 500 to apply, in the case in which the current lateral acceleration lies below the maximum permitted lateral acceleration, an automatic limitation of the longitudinal acceleration of the vehicle and/or the speed of the vehicle in order to avoid that the current lateral acceleration exceeds the maximum permitted lateral acceleration.

Parts of the methods described here may be carried out by the arrangement 500 with the aid of the data processing unit 510, which runs the program stored in the memory 560 or in the read/write memory 550. When the arrangement 500 runs the program, the method described here is executed.

The description above of the preferred embodiments of the present invention has been given for the purposes of illustration and description.

## Claims

1. A method for the adaptation of the driving of a vehicle on a roadway in association with taking a curve, comprising the steps: to determine continuously (S1) the current lateral acceleration, to compare (S2), based on a maximum permitted lateral acceleration of the vehicle that has been determined, the current lateral acceleration with the maximum permitted lateral acceleration; and **characterised by** the step: in the case in which the current lateral acceleration lies below the maximum permitted lateral acceleration, to apply (S3) an automatic limitation of the longitudinal acceleration of the vehicle, in order to avoid that the current lateral acceleration exceeds the maximum permitted lateral acceleration.

2. The method according to claim 1, comprising the step to initiate automatically retardation of the vehicle, in the case in which the current lateral acceleration has been determined to exceed the maximum permitted lateral acceleration.

3. The method according to claim 2, whereby retardation of the vehicle takes place through what is known as "coasting in gear" of the vehicle engine and/or coasting in neutral.

4. The method according to any one of claims 1-3, comprising the step of presenting to the driver of the vehicle the fact that automatic limitation of the longitudinal acceleration of the vehicle is being applied.

5. The method according to claim 2 or 3, comprising the step of presenting to the driver of the vehicle the fact that automatically initiated retardation of the vehicle is being applied.

6. A system (I) for the adaptation of the driving of a vehicle (1) on a roadway in association with taking a curve, comprising means (110) to determine continuously the current lateral acceleration of the vehicle on such a roadway and; means (120) to compare, based on a maximum permitted lateral acceleration of the vehicle that has been determined, the current lateral acceleration with the maximum permitted lateral acceleration; and **characterised**

**by** further comprising means (150) to apply, in the case in which the current lateral acceleration lies below the maximum permitted lateral acceleration, an automatic limitation of the longitudinal acceleration of the vehicle in order to avoid that the current lateral acceleration exceeds the maximum permitted lateral acceleration.

7. The system according to claim 6, comprising means (170) to initiate automatically retardation of the vehicle, in the case in which the current lateral acceleration has been determined to exceed the maximum permitted lateral acceleration.

8. The system according to claim 7, whereby said means (170) are configured such that retardation of the vehicle is arranged to take place through what is known as "coasting in gear" of the vehicle engine and/or coasting in neutral.

9. The system according to any one of claims 6-8, comprising means (182) to present to the driver of the vehicle the fact that automatic limitation of the longitudinal acceleration of the vehicle is being applied.

10. The system according to claim 7 or 8, comprising means (184) of presenting to the driver of the vehicle the fact that automatically initiated retardation of the vehicle is being applied.

11. A motor vehicle (1) comprising a system (I) according to any one of claims 6-10.

12. A computer program (P) for the adaptation of the driving of a vehicle on a roadway in association with taking a curve, where the said computer program (P) comprises instructions that, when it is run by an electronic control unit (100) or by another computer (500) connected to the electronic control unit (100), causes the electronic control unit (100) to carry out a method according to any one of claims 1-5.

13. A computer program product comprising a digital storage medium that stores the computer program according to claim 12.


**Patentansprüche**

1. Verfahren zur Anpassung des Fahrens eines Fahrzeugs auf einer Straße im Zusammenhang mit einer Kurvenfahrt, das folgende Schritte umfasst: kontinuierliches Bestimmen (S1) der aktuellen Querbeschleunigung, Vergleichen (S2) der aktuellen Querbeschleunigung mit der maximal zulässigen Querbeschleunigung basierend auf einer bestimmten maximal zulässigen Querbeschleunigung; und **gekennzeichnet durch** folgenden Schritt: Durchführen (S3) einer automatischen Begrenzung der Längsbeschleunigung des Fahrzeugs, wenn die aktuelle Querbeschleunigung unter der maximal zulässigen Querbeschleunigung liegt, um zu vermeiden, dass die aktuelle Querbeschleunigung die maximal zulässige Querbeschleunigung überschreitet.

2. Verfahren nach Anspruch 1, das den folgenden Schritt umfasst: Einleiten einer automatischen Verzögerung des Fahrzeugs, wenn festgestellt wird, dass die aktuelle Querbeschleunigung die maximal zulässige Querbeschleunigung überschreitet.

3. Verfahren nach Anspruch 2, wobei die Verzögerung des Fahrzeugs durch das sogenannte "Ausrollen mit eingelegtem Gang" des Fahrzeugmotors und/oder das Ausrollen im Leerlauf erfolgt.

4. Verfahren nach einem der Ansprüche 1 bis 3, das den Schritt umfasst, dem Fahrer des Fahrzeugs mitzuteilen, dass eine automatische Begrenzung der Längsbeschleunigung des Fahrzeugs erfolgt.

5. Verfahren nach Anspruch 2 oder 3, das den Schritt umfasst, dem Fahrer des Fahrzeugs mitzuteilen, dass eine automatisch eingeleitete Verzögerung des Fahrzeugs erfolgt.

6. System (I) zur Anpassung des Fahrens eines Fahrzeugs (1) auf einer Straße im Zusammenhang mit einer Kurvenfahrt mit Mitteln (110) zum kontinuierlichen Bestimmen der aktuellen Querbeschleunigung des Fahrzeugs auf einer solchen Straße und Mitteln (120) zum Vergleichen der aktuellen Querbeschleunigung des Fahrzeugs mit der maximal zulässigen Querbeschleunigung basierend auf einer bestimmten maximal zulässigen Querbeschleunigung des Fahrzeugs; und **dadurch gekennzeichnet, dass** es ferner Mittel (150) umfasst, um eine automatische Begrenzung der Längsbeschleunigung des Fahrzeugs durchzuführen, wenn die aktuelle Querbeschleunigung unter der maximal zulässigen Querbeschleunigung liegt, um zu vermeiden, dass die aktuelle Querbeschleunigung die maximal zulässige Querbeschleunigung überschreitet.

7. System nach Anspruch 6, das Mittel (170) umfasst, die eine automatische Verzögerung des Fahrzeugs einleiten, wenn festgestellt wird, dass die bestimmte aktuelle Querbeschleunigung die maximal zulässige Querbeschleunigung überschreitet.

8. System nach Anspruch 7, wobei die Mittel (170) derart konfiguriert sind, dass die Verzögerung des Fahrzeugs durch das sogenannte "Ausrollen mit eingelegtem Gang" des Fahrzeugmotors und/oder Ausrollen im Leerlauf erfolgt.

9. System nach einem der Ansprüche 6 bis 8, das Mittel (182) umfasst, um dem Fahrer des Fahrzeugs mitzuteilen, dass eine automatische Begrenzung der Längsbeschleunigung des Fahrzeugs erfolgt.

10. System nach Anspruch 7 oder 8, das Mittel (184) umfasst, um dem Fahrer des Fahrzeugs mitzuteilen, dass eine automatisch eingeleitete Verzögerung des Fahrzeugs erfolgt.

11. Kraftfahrzeug (1) mit einem System (I) nach einem der Ansprüche 6 bis 10.

12. Computerprogramm (P) zur Anpassung des Fahrens eines Fahrzeugs auf einer Straße im Zusammenhang mit einer Kurvenfahrt, wobei das Computerprogramm (P) Befehle umfasst, die, wenn das Computerprogramm von einer elektronischen Steuereinheit (100) oder von einem anderen mit der elektronischen Steuereinheit (100) verbundenen Rechner (500) ausgeführt wird, die elektronische Steuereinheit (100) veranlassen, ein Verfahren nach einem der Ansprüche 1-5 auszuführen.

13. Computerprogrammprodukt mit einem digitalen Speichermedium, das das Computerprogramm nach Anspruch 12 speichert.

## Revendications

1. Procédé d'adaptation de la conduite d'un véhicule sur une chaussée en association avec la prise d'une courbe, comprenant les étapes consistant à : déterminer en continu (S1) l'accélération latérale actuelle, comparer (S2), sur la base d'une accélération latérale maximale autorisée du véhicule qui a été déterminée, l'accélération latérale actuelle avec l'accélération latérale maximale autorisée ; et **caractérisé par** l'étape consistant à :
dans le cas où l'accélération latérale actuelle est inférieure à l'accélération latérale maximale autorisée, appliquer (S3) une limitation automatique de l'accélération longitudinale du véhicule, afin d'éviter que l'accélération latérale actuelle ne dépasse l'accélération latérale maximale autorisée.

2. Procédé selon la revendication 1, comprenant l'étape consistant à déclencher automatiquement le ralentissement du véhicule, dans le cas où il a été déterminé que l'accélération latérale actuelle dépasse l'accélération latérale maximale autorisée.

3. Procédé selon la revendication 2, moyennant quoi le ralentissement du véhicule s'effectue par ce que l'on appelle la « marche au débrayé » du moteur du véhicule et/ou la mise au point mort.

4. Procédé selon l'une quelconque des revendications 1-3, comprenant l'étape consistant à présenter au conducteur du véhicule le fait qu'une limitation automatique de l'accélération longitudinale du véhicule est appliquée.

5. Procédé selon la revendication 2 ou 3, comprenant l'étape consistant à présenter au conducteur du véhicule le fait qu'un ralentissement déclenché automatiquement du véhicule est appliqué.

6. Système (I) d'adaptation de la conduite d'un véhicule (1) sur une chaussée en association avec la prise d'une courbe, comprenant un moyen (110) pour déterminer en continu l'accélération latérale actuelle du véhicule sur une telle chaussée et ; un moyen (120) pour comparer, sur la base d'une accélération latérale maximale autorisée du véhicule qui a été déterminée, l'accélération latérale actuelle avec l'accélération latérale maximale autorisée ; et **caractérisé en ce qu'**il comprend en outre des moyens (150) pour appliquer, dans le cas où l'accélération latérale actuelle est inférieure à l'accélération latérale maximale autorisée, une limitation automatique de l'accélération longitudinale du véhicule afin d'éviter que l'accélération latérale actuelle ne dépasse l'accélération latérale maximale autorisée.

**7.** Système selon la revendication 6, comprenant des moyens (170) pour déclencher automatiquement le ralentissement du véhicule, dans le cas où il a été déterminé que l'accélération latérale actuelle dépasse l'accélération latérale maximale autorisée.

**8.** Système selon la revendication 7, moyennant quoi lesdits moyens (170) sont configurés de telle sorte que le ralentissement du véhicule est agencé pour s'effectuer par ce que l'on appelle la « marche au débrayé » du moteur du véhicule et/ou la mise au point mort.

**9.** Système selon l'une quelconque des revendications 6-8, comprenant un moyen (182) pour présenter au conducteur du véhicule le fait qu'une limitation automatique de l'accélération longitudinale du véhicule est appliquée.

**10.** Système selon la revendication 7 ou 8, comprenant un moyen (184) pour présenter au conducteur du véhicule le fait qu'un ralentissement déclenché automatiquement du véhicule est appliqué.

**11.** Véhicule à moteur (1) comprenant un système (I) selon l'une quelconque des revendications 6-10.

**12.** Programme informatique (P) d'adaptation de la conduite d'un véhicule sur une chaussée en association avec la prise d'une courbe, où ledit programme informatique (P) comprend des instructions et qui, lorsqu'il est exécuté par une unité de commande électronique (100) ou par un autre ordinateur (500) connecté à l'unité de commande électronique (100), amène la réalisation par l'unité de commande électronique (100) d'un procédé selon l'une quelconque des revendications 1-5.

**13.** Produit de programme informatique comprenant un support de stockage numérique qui stocke le programme informatique selon la revendication 12.

Fig. 1

Fig. 2

Fig. 3

START

DETERMINE CONTINUOUSLY THE CURRENT LATERAL ACCELERATION OF THE VEHICLE

S1

COMPARE, BASED ON A MAXIMUM PERMITTED LATERAL ACCELERATION OF THE VEHICLE THAT HAS BEEN DETERMINED, THE CURRENT LATERAL ACCELERATION WITH THE MAXIMUM PERMITTED LATERAL ACCELERATION

S2

APPLY, IN THE CASE IN WHICH THE CURRENT LATERAL ACCELERATION LIES BELOW THE MAXIMUM PERMITTED LATERAL ACCELERATION, AN AUTOMATIC LIMITATION OF THE LONGITUDINAL ACCELERATION OF THE VEHICLE AND/OR THE SPEED OF THE VEHICLE IN ORDER TO AVOID THAT THE CURRENT LATERAL ACCELERATION EXCEEDS THE MAXIMUM PERMITTED LATERAL ACCELERATION.

S3

END

## Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2527222 A

- DE 102012215100 A1